# EUROPÄISCHE PATENTSCHRIFT

(11) **EP 1 732 862 B1**
(45) Veröffentlichungstag und Bekanntmachung des Hinweises auf die Patenterteilung: **14.10.2015**
(21) Anmeldenummer: 05717064.9
(22) Anmeldetag: 16.03.2005
(51) Int. Cl.: C04B 35/26, H01F 1/34, H01F 17/00, H01F 41/00

(54) **GLAS-KERAMIK-ZUSAMMENSETZUNG, ELEKTRISCHES BAUELEMENT MIT DER GLAS-KERAMIK-ZUSAMMENSETZUNG UND KERAMISCHER MEHRSCHICHTKÖRPER MIT DEM ELEKTRISCHEN BAUELEMENT**
GLASS CERAMIC COMPOSITION, ELECTRICAL COMPONENT COMPRISING ONE SUCH COMPOSITION, AND CERAMIC MULTI-LAYER BODY COMPRISING ONE SUCH ELECTRIC COMPONENT
COMPOSITION DE VITROCERAMIQUE, COMPOSANT ELECTRIQUE POURVU D'UNE TELLE COMPOSITION DE VITROCERAMIQUE, ET CORPS MULTICOUCHE CERAMIQUE COMPORTANT UN TEL COMPOSANT ELECTRIQUE

(30) Priorität: 30.03.2004 DE 102004015582
(43) Veröffentlichungstag der Anmeldung: 20.12.2006
(73) Patentinhaber: Siemens Aktiengesellschaft, 80333 München (DE)
(72) Erfinder: DERNOVSEK, Oliver, 8054 Graz (AT); KARMAZIN, Roman, 80939 München (DE); WERSING, Wolfram, 83346 Bergen (DE)
(86) Internationale Anmeldenummer: PCT/EP2005/051196
(87) Internationale Veröffentlichungsnummer: WO 2005/095301

(56) Entgegenhaltungen:
- WO-A-02/32824
- WO-A-2004/074208
- US-A- 5 855 810
- US-A1- 2003 052 299
- US-A1- 2003 109 375

## Beschreibung

Die Erfindung betrifft Pulverpartikel zum Herstellen einer Glas-Keramik-Zusammensetzung mit mindestens einem Ferrit und mindestens einem Glasmaterial.

Aus der US 5,855,810 A, der US 2003/005229 A1 und der WO 04/074208 A1 ist jeweils eine Glas-Keramik-Zusammensetzung bekannt.

Eine Glas-Keramik-Zusammensetzung der genannten Art ist auch aus der US 6,127,296 A bekannt. Das Ferrit ist ein hexagonales Ferrit. Das hexagonale Ferrit ist beispielsweise eine Oxidkeramik mit der allgemeinen Zusammensetzung Ba₃M^{II}₂Fe₂₄O₄₁, wobei M^{II} ein zweiwertiges Metall ist, das aus der Gruppe Cobalt, Nickel und/oder Zink ausgewählt ist. Das Glasmaterial besteht aus Magnesiumoxid (MgO), Calciumoxid (CaO), Strontiumoxid (SrO), Aluminiumtrioxid (Al₂O₃), Bortrioxid (B₂O₃) und Siliziumdioxid (SiO₂). Ein Keramikanteil des Ferrits an der Glas-Keramik-Zusammensetzung beträgt 35 Gew.% bis 55 gew.%. Ein Glasanteil des Glasmaterials beträgt zwischen 65 Gew.% und 45 Gew.%. Die Glas-Keramik-Zusammensetzung zeichnet sich durch eine relativ niedrige Dichtbrandtemperatur aus. Bei der Dichtbrandtemperatur kann ein weitgehendes Verdichten der Glas-Keramik-Zusammensetzung in relativ kurzer Zeit erreicht werden. Ein Grünkörper mit einer Mischung aus Pulverpartikeln des Ferrits und des Glasmaterials der bekannten Glas-Keramik-Zusammensetzung kann bei einer Temperatur von unter 900°C gesintert werden. Aufgrund des relativ hohen Glasanteils erfolgt ein Verdichten der Pulverpartikel der Glas-Keramik-Zusammensetzung zu einem keramischen Körper in erster Linie durch viskoses Fließen. Das viskose Fließen findet über eine Glasschmelze statt, die im Temperaturbereich einer Erweichungstemperatur T_{soft} des Glasmaterials auftritt. Der durch das viskose Fliesen resultierende keramische Körper zeichnet sich durch eine hohe relative Dichte von bis zu 98% der theoretisch möglichen Dichte aus. Aufgrund des Ferrits eignet sich die Glas-Keramik-Zusammensetzung als Kernmaterial eines Kerns eines induktiven Bauelements. Allerdings ist aufgrund des relativ hohen Glasanteils eine Höhe der magnetischen Permeabilität µ des Kernmaterials begrenzt.

Aus der WO 02/32324 A1 ist eine Glas-Keramik-Zusammensetzung bekannt, die als Mikrowellenkeramik eingesetzt wird. Ein Keramikmaterial der Glas-Keramik-Zusammensetzung ist eine Oxidkeramik, beispielsweise BaNd₂Ti₄O₁₂. Das Glasmaterial der Glas-Keramik-Zusammensetzung weist neben Boroxid, Siliziumdioxid und Zinkoxid zusätzlich Bismuttrioxid (Bi₂O₃) auf. Der Keramikanteil beträgt zwischen 70 Vol.% und 95 Vol.%. Der Glasanteil beträgt zwischen 30 Vol.% und 5 Vol.%. Auch hier ist eine Dichtbrandtemperatur von unter 900°C erreichbar. Das Sintern erfolgt hier in erster Linie durch reaktives Flüssigphasensintern. Während des Sinterns bildet sich aus dem Glasmaterial eine flüssige Glasphase (Glasschmelze). Bei einer höheren Temperatur löst sich die Oxidkeramik in der Glasschmelze auf, bis eine Sättigungskonzentration erreicht ist und es zu einer Wiederausscheidung kommt.

Die vorgestellten Glas-Keramik-Zusammensetzungen eignen sich zur Anwendung in der LTCC (Low Temperature Cofired Ceramics)-Technologie. Die LTCC-Technologie ist beispielsweise in D. L. Wilcox et al, Proc. 1997 ISAM, Philadelphia, Seiten 17 bis 23 beschrieben. Die LTCC-Technologie ist ein keramisches Mehrschichtverfahren, bei dem ein passives elektrisches Bauelement im Volumen eines keramischen Mehrschichtkörpers integriert werden kann. Das passive elektrische Bauelement ist beispielsweise eine elektrische Leiterbahn, ein Kondensator und ein induktives Bauelement. Eine Integration gelingt beispielsweise dadurch, dass eine dem Bauelement entsprechende Metallstruktur auf eine oder mehrere keramische Grünfolien aufgedruckt wird, die bedruckten keramischen Grünfolien übereinander zu einem Verbund gestapelt und der Verbund gesintert wird. Da keramische Grünfolien mit niedrig sinternder Glas-Keramik-Zusammensetzung verwendet werden, kann niedrig schmelzendes, elektrisch hochleitfähiges elementares Metall Me0 wie Silber oder Kupfer im Verbund mit der keramischen Grünfolien gesintert werden. Dabei ist eine Funktionsfähigkeit des mit Hilfe der LTCC-Technolgie integrierten Bauelements entscheidend von einer elektrischen Materialeigenschaft der resultierenden Glas-Keramik-Zusammensetzung abhängig.

Wie bereits angegeben, kann mit der Glas-Keramik-Zusammensetzung aus der US 6,127,296 A durch den hohen Glasanteil zwar eine hohe relative Dichte, aber nur eine begrenzte magnetische Permeabilität erzielt werden.

Aufgabe der vorliegenden Erfindung ist es, Pulverpartikel zum Herstellen einer Glas-Keramik-Zusammensetzung zur Verfügung zu stellen, wobei sich die Glas-Keramik-Zusammensetzung bei relativ niedriger Temperatur verdichten lässt und im verdichteten Zustand in einem weiten Frequenzbereich eine im Vergleich zum bekannten Stand der Technik höhere magnetische Permeabilität aufweist.

Zur Lösung der Aufgabe werden Pulverpartikel zum Herstellen einer Glas-Keramik-Zusammensetzung angegeben, mit mindestens einem Ferrit, wobei das Ferrit Pulverpartikel aufweisen mit einer mittleren Partikelgröße d₅₀, die aus dem Bereich von einschließlich 0,1 µm bis einschließlich 1,5 µm und insbesondere aus dem Bereich von einschließlich 0,1 µm und einschließlich 0,5 µm ausgewählt ist, und die Pulverpartikel des Ferrits eine Beschichtung mit einer Vorstufe eines Metalloxids zur Erhöhung einer Sinteraktivität des Ferrits aufweisen, die bei einer Wärmebehandlung, beispielsweise während des Sinterns, ein Glasmaterial der Glas-Keramik-Zusammensetzung bildet, und wobei das Glasmaterial ein Oxid mit Bismut aufweist.

Das Ferrit ist eine Oxidkeramik mit der allgemeinen Summenformel M^{II}Fe^{III}₂O₄ (bzw. M^{II}O·Fe₂O₃). M^{II} ist ein zweiwertiges Metall, beispielsweise Cobalt, Mangan oder Eisen. Insbesondere weist das Ferrit mindestens ein aus der Gruppe Nickel und/oder Zink ausgewähltes zweiwertiges Metall auf.

Das Ferrit kann als einzige Phase vorliegen. Denkbar ist auch, dass das Ferrit in mehreren Phasen vorliegt.

Das Glasmaterial kann ebenfalls als eine einzige Phase vorliegen. Beispielsweise ist die Phase eine Glasschmelze mit Bortrioxid, Siliziumdioxid, Zinkoxid und Bismuttrioxid. Denkbar ist auch, dass das Glasmaterial aus mehreren Phasen besteht. Beispielsweise setzt sich das Glasmaterial eines keramischen Grünkörpers mit der Glas-Keramik-Zusammensetzung aus Glaspulver der angegebenen Oxide zusammen. Das Glasmaterial kann, beispielsweise nach dem Sintern, auch in kristalliner Form vorliegen. Bei der aus der erfindungsgemäßen Pulvermischung hergestellten Glas-Keramik-Zusammensetzung wird ein Bismutoxid und insbesondere Bismuttrioxid im Glasmaterial verwendet. Die Anwesenheit von Bismuttrioxid im Glasanteil führt dazu, dass der Glasanteil an der Glas-Keramik-Zusammensetzung deutlich reduziert werden kann, ohne dass dadurch die Dichtbrandtemperatur der Glas-Keramik-Zusammensetzung steigen würde. Bismuttrioxid im Glasanteil führt nämlich zu einer Erniedrigung der Erweichungstemperatur T_{soft} des Glasmaterials. Je niedriger die Erweichungstemperatur liegt, desto tiefer liegt die Dichtbrandtemperatur der Glas-Keramik-Zusammensetzung. Aufgrund der niedrigen Dichtbrandtemperatur kann die Glas-Keramik-Zusammensetzung in der LTCC-Technologie eingesetzt werden. Aufgrund des niedrigeren Glasanteils resultiert eine Glas-Keramik-Zusammensetzung, die über eine relativ hohe magnetischen Permeabilität verfügt.

Das Bismuttrioxid beeinflusst auch das Auflösen und das Wiederabscheiden des Ferrits in der Glasschmelze während des Sinterns in besonders günstiger Weise. Es findet nahezu kein Herauslösen einzelner Bestandteile des Ferrits statt. Die Zusammensetzung des Ferrits ändert sich während des Sinterns nicht oder nur geringfügig und kann deshalb sehr gut voreingestellt werden.

Bezüglich einer Art des Magnetismus des Ferrits gibt es keine Einschränkungen. Als Kernmaterial eines induktiven Bauelements wird beispielsweise ein ferromagnetisches Ferrit verwendet. Als Dielektrikum eines Kondensators wird dagegen bevorzugt ein paramagnetisches Ferrit verwendet.

Bezüglich einer Struktur des Ferrits gibt es ebenfalls keine Einschränkungen. Das Ferrit kann ein kubisches Ferrit sein. Dabei bilden die Oxidionen eine kubisch dichteste Kugelpackung, in deren Lücken die Kationen des Ferrits sitzen. Vorzugsweise ist das Ferrit ein hexagonales Ferrit. Bei einem hexagonalen Ferrit bilden die Oxidionen eine hexagonal dichteste Kugelpackung, in deren Lücken die Kationen des Ferrits sitzen. Es liegt ein Hexaferritsystem vor.

In einer besonderen Ausgestaltung weist das Glasmaterial mindestens ein Oxid mindestens eines aus der Gruppe Beryllium, Magnesium, Calcium, Strontium, Barium, Kupfer und/oder Zink ausgewählt zweiwertigen Metalls Me2+ auf. Insbesondere ist hier Zinkoxid (ZnO) zu erwähnen. Zink hat einen besonders günstigen Einfluss auf das reaktive Flüssigphasensintern und einen dabei auftretenden Auflösungs- und Wiederabscheidungsprozess. Dies gilt insbesondere für den Fall, dass Zink im Ferrit enthalten ist.

In einer weiteren Ausgestaltung weist das Glasmaterial mindestens ein Oxid mindestens eines aus der Gruppe Aluminium und/oder Bor ausgewählten dreiwertigen Metalls Me3+ auf. In einer weiteren Ausgestaltung weist das Glasmaterial mindestens ein Oxid mindestens eines aus der Gruppe Silizium, Germanium, Zinn, Titan und/oder Zirkonium ausgewählten vierwertigen Metalls Me4+ auf. Neben Siliziumdioxid unterstützen die Oxide der aufgezählten zwei-, drei- und vierwertigen Metalle eine Glasigkeit des Glasmaterials. Dies bedeutet, dass mit Hilfe dieser Oxide eine Viskositäts-Temperatur-Charakteristik des Glasmaterials gesteuert werden kann. Beispielsweise lässt sich die Erweichungstemperatur T_{soft} des Glasmaterials einstellen. Ebenso kann eine Kristallisation des Glasmaterials während des Sinterns beeinflusst werden.

In einer besonderen Ausgestaltung ergeben sich 100 Vol.% der Glas-Keramik-Zusammensetzung aus einem Keramikanteil des Ferrits und einem Glasanteil des Glasmaterials, wobei der Keramikanteil aus dem Bereich von einschließlich 70 Vol.% bis einschließlich 95 Vol.% und der Glasanteil aus dem Bereich von einschließlich 30 Vol.% bis einschließlich 5 Vol.% ausgewählt ist. Wenn die Glas-Keramik-Zusammensetzung einem Sintern unterzogen wird, findet das oben erwähnte reaktive Flüssigphasensintern statt. Bei besonders günstigem Auflösungs- und Wiederausscheideverhalten, wie es beispielsweise dann vorliegt, wenn das Zink im Ferrit und im Glasmaterial vorkommt, ist es möglich, den Glasanteil unter 5 Vol.% zu halten.

Das Ferrit weist Pulverpartikel auf mit einer mittleren Partikelgröße d₅₀, die aus dem Bereich von einschließlich 0,1 µm bis einschließlich 1,5 µm und insbesondere aus dem Bereich von einschließlich 0,1 µm und einschließlich 0,5 µm ausgewählt ist. Die mittlere Partikelgröße wird auch als Halbwertspartikelgröße bezeichnet. Zum Einhalten eines sehr geringen Glasanteils ohne Einschränkung bezüglich des Auflösungs- und Wiederausscheideverhaltens sind Pulver mit den angegebenen Partikelgrößen von besonderem Vorteil. Die Pulver verfügen über eine große, für das reaktive Flüssigphasensintern notwendige reaktive Oberfläche.

Das reaktive Flüssigphasensintern wird dadurch begünstigt, dass die Pulverpartikel des Ferrits eine Beschichtung mit einer Vorstufe eines Metalloxids aufweisen. Die Vorstufe des Metalloxids ist vorzugsweise ein Salz eines Metalls des Metalloxids. Das Salz ist beispielweise ein Nitrat oder Sulfat. Insbesondere ist das Salz des Metalls zumindest eine aus der Gruppe Alkoholat, Carboxylat und/oder Oxalat ausgewählte metallorganische Verbindung. Das Metalloxid der Beschichtung kann dabei ein Bestandteil bzw. eine Vorstufe des Ferrits sein.

Durch die Beschichtung wird die Sinteraktivität des Ferrits erhöht. Dabei genügt bereits eine sehr dünne Beschichtung auf den Pulverpartikeln. Daher weist die Beschichtung in einer besonderen Ausgestaltung eine aus dem Bereich von 0,01 µm bis 0,05 µm ausgewählte Schichtdicke auf. Zum Herstellen der Beschichtung wird beispielsweise ein nasschemisches Verfahren wie das Oxalat-Verfahren durchgeführt. Dabei werden die Oberflächen der Pulverpartikel mit einer flüssigen Vorstufe oder mit einer Lösung der Vorstufe versehen und nachfolgend getrocknet. Während einer Wärmebehandlung, beispielsweise während des Sinterns, geht die Vorstufe in das Glasmaterial über. Wenn die dünne Beschichtung (unter 0,5 µm) aus dem Glasmaterial besteht und kein weiteres Glasmaterial vorhanden ist, kann ein reaktives Flüssigphasensintern mit einem sehr kleinen Glasanteil von unter 1 Vol.% stattfinden.

Neben der erhöhten Sinteraktivität kann durch die Beschichtung eine ferritische (magnetische oder elektrische) Materialeigenschaft der Glas-Keramik-Zusammensetzung in weiten Bereichen variiert werden. Die ferritische Materialeigenschaft ist beispielsweise die Permeabilität (µ), die Permittivität (εᵣ), die Güte (Q) und der Temperaturgang der Frequenz (Tkf). Beispielsweise besteht die Beschichtung der Pulverpartikel selbst aus einem Ferrit. Sowohl das Ferrit des Kerns als auch das Ferrit der Beschichtung beeinflussen die Materialeigenschaft der Glas-Keramik-Zusammensetzung. Aufgrund des hohen Ferrit-Anteils an der Glas-Keramik-Zusammensetzung ist eine relativ hohe magnetische Permeabilität zugänglich. Bei einer elektrischen Ansteuerfrequenz im Bereich von einschließlich 0,01 kHz bis einschließlich 1 GHz weist die Glas-Keramik-Zusammensetzung eine magnetische Permeabilität µ aus dem Bereich von einschließlich 20 bis einschließlich 100 und insbesondere aus dem Bereich von einschließlich 25 bis einschließlich 75 auf.

Üblicherweise wird zur Erniedrigung der Sintertemperatur einer Glas-Keramik-Zusammensetzung dem Glasmaterial Bleioxid (PbO) zugegeben. Mit der vorliegenden Erfindung gelingt es, die Dichtbrandtemperatur der Glas-Keramik-Zusammensetzung auch ohne Bleioxid oder Cadmiumoxid (CdO) zu erniedrigen. In einer besonderen Ausgestaltung beträgt daher ein Bleioxidanteil und/oder ein Cadmiumoxidanteil der Glas-Keramik-Zusammensetzung, des Ferrits und/oder des Glasmaterials maximal 0,1 % und insbesondere maximal 1 ppm. Vorzugsweise ist der Anteil von Bleioxid und Cadmiumoxid nahezu Null.

Aufgrund der hohen Sinteraktivität zeichnet sich die Glas-Keramik-Zusammensetzung durch eine relativ niedrige Dichtbrandtemperatur aus. In einer besonderen Ausgestaltung weist die Glas-Keramik-Zusammensetzung eine Dichtbrandtemperatur von maximal 950°C und insbesondere von maximal 900°C auf. Damit kann die Glas-Keramik-Zusammensetzung in der LTCC-Technologie eingesetzt werden. Dabei können insbesondere Leiterstrukturen aus Silber im Mehrschichtkörper integriert werden. Bei den niedrigen Dichtbrandtemperaturen neigt Silber nicht zur Diffusion in die Keramik. Die Leiterstrukturen bleiben während des Sinterns erhalten.

Die Glas-Keramik-Zusammensetzung kann zur Realisierung eines beliebigen elektrischen Bauelements verwendet werden. Das Bauelement ist beispielsweise ein Kondensator. Die Glas-Keramik-Zusammensetzung fungiert als Dielektrikum des Kondensators. Insbesondere eignet sich die Glas-Keramik-Zusammensetzung zur Realisierung eines induktiven Bauelements. Daher wird in einer besonderen Ausgestaltung ein elektrisches Bauelement in Form eines induktiven Bauelements zur Bildung eines magnetischen Kreises angegeben, aufweisend mindestens eine elektrische Drahtwicklung und mindestens einen Kern mit einem ferromagnetischen Kernmaterial, das eine oben beschriebene Glas-Keramik-Zusammensetzung aufweist. Die Drahtwicklung weist eine Anzahl von Windungen eines elektrischen Leiters auf. Zur Vergrößerung einer mit Hilfe der Drahtwicklung erzielbaren magnetischen Induktion und zur Vermeidung eines magnetischen Streuverlusts befindet sich die Wicklung meist auf einem Kern mit dem ferromagnetischen Material. Das induktive Bauelement ist bevorzugt eine Drosselspule oder ein Transformator.

In einer besonderen Ausgestaltung weist die Drahtwicklung des induktiven Bauelements zumindest ein aus der Gruppe Gold, Silber und/oder Kupfer ausgewähltes elementares Metall Me0 auf. Mit Hilfe der Glas-Keramik-Zusammensetzung kann das induktive Bauelement mit Hilfe der LTCC-Technologie im Volumen eines keramischen Mehrschichtkörpers integriert werden. Daher wird ein keramischer Mehrschichtkörper mit dem beschriebenen elektrischen und insbesondere mit dem beschriebenen induktiven Bauelement angegeben. Das elektrische bzw. induktive Bauelement ist dabei Bestandteil einer beliebigen elektrischen Schaltung. Durch die elektrische Schaltung ist beispielsweise ein Gyrator, ein Phasenschieber oder ein Zirkulator realisiert.

Zur Umsetzung der LTCC-Technologie, also zum Herstellen des keramischen Mehrschichtkörpers mit dem elektrischen Bauelement, werden beispielsweise folgende Verfahrensschritten durchgeführt: a) Bereitstellen mehrerer keramischer Grünfolien mit der Glas-Keramik-Zusammensetzung, b) Bedrucken der keramischen Grünfolien mit einer Leitungsstruktur zum Bilden, c) Stapeln der bedruckten keramischen Grünfolien und d) Entbindern und Sintern des Stapels aus den keramischen Grünfolien, wobei aus der Glaskeramik-Zusammensetzung und den Leitungsstrukturen das elektrische Bauelement gebildet wird. Beim Entbindern wird ein in den Grünfolien enthaltender organischer Binder ausgebrannt. Das Entbindern erfolgt beispielsweise bei einer Temperatur von bis zu 600°C. Das Sintern wird bei einer Temperatur von unter 950°C und insbesondere bei einer Temperatur von unter 900°C durchgeführt.

Für die Integration eines induktiven Bauelements werden keramische Grünfolien mit einer Glas-Keramik-Zusammensetzung verwendet, die ein ferromagnetisches Ferrit aufweist. Die Leitungsstrukturen werden derart auf die Grünfolien aufgetragen und die Grünfolien werden derart gestapelt und laminiert, dass während des Sinterns die Drahtwicklung des induktiven Bauelements gebildet wird. Aus den Grünfolien mit der Glas-Keramik-Zusammensetzung bildet sich der Kern des induktiven Bauelements.

Zur Integration mehrerer elektrischer Bauelemente können keramische Grünfolien mit unterschiedlichen Glas-Keramik-Zusammensetzungen eingesetzt werden. Beispielsweise wird mit Hilfe der keramischen Grünfolien eine Drosselspule und ein Kondensator im Mehrschichtkörper integriert. Es werden keramische Grünfolien, die mit Elektrodenmaterial bedruckt sind und aus denen die Drosselspule gebildet wird, und keramische Grünfolien, die ebenfalls mit Elektrodenmaterial bedruckt sind und aus denen der Kondensator gebildet wird, übereinander gestapelt, entbindert und gemeinsam gesintert.

Vorteilhaft zeichnen sich die verwendeten Glas-Keramik-Zusammensetzungen durch unterschiedliche Dichtbrandtemperaturen aus. Die Grünfolien mit den unterschiedlichen Glas-Keramik-Zusammensetzungen werden derart übereinander gestapelt, so dass beim Sintern des Stapels zum keramischen Mehrschichtkörper weitgehend keine laterale Schwindung (x,y-zero-shrinkage) auftritt. Damit ist eine endkonturennahe Fertigung des keramischen Mehrschichtkörpers möglich.

Zusammenfassend ergeben sich mit der Erfindung folgende wesentlichen Vorteile:
- Durch die Verwendung des Glasmaterials mit dem Bismutoxid kann die Glas-Keramik-Zusammensetzung trotz hohem Keramikanteil des Ferrits bei einer relativ niedrigen Sintertemperatur von unter 900°C nahezu komplett verdichtet werden.
- Durch die niedrige Dichtbrandtemperatur findet während des Sinterns nahezu keine Silberdiffusion statt. Somit steht die Glas-Keramik-Zusammensetzung dem weiten Anwendungsfeld der LTCC-Technologie zur Verfügung.
- Durch eine geeignete Beschichtung können die Sintercharakteristik und die ferritischen Materialeigenschaften der Glas-Keramik-Zusammensetzung gezielt variiert werden.
- Das Verdichten bei niedriger Sintertemperatur gelingt ohne Einsatz von Bleioxid und/oder Cadmiumoxid.

Anhand eines Ausführungsbeispiels und der dazu gehörigen Figuren wird die Erfindung im Folgenden näher erläutert. Die Figuren sind schematisch und stellen keine maßstabsgetreue Abbildung dar.
- Figur 1: zeigt einen Ausschnitt eines keramischen Mehrschichtkörpers im Querschnitt, in dessen Volumen ein elektrisches Bauelement mit der Glas-Keramik-Zusammensetzung integriert ist.
- Figur 2: zeigt einen Querschnitt eines Pulverpartikels des Ferrits der Glas-Keramik-Zusammensetzung.

Eine nicht erfindungsgemäße Glas-Keramik-Zusammensetzung ist eine Pulvermischung aus einem Ferrit 3 und einem Glasmaterial 4. Das Ferrit 3 ist ein Nickel-Zink-Ferrit der allgemeinen Summenformel Ni_{0,5}Zn_{0,5}Fe₂O₄. Der Keramikanteil des Ferrits 3 beträgt etwa 95 Vol.%. Das Glasmaterial 4 setzt sich aus Pulvern aus Bortrioxid, Bismuttrioxid und Zinkoxid zusammen. Der Glasanteil des Glasmaterials 4 beträgt etwa 5 Vol.%.

Zur Herstellung des Ferrits 3 werden entsprechende Mengen an Zinkoxid, Nickeloxid und Eisentrioxid vermengt, calziniert bzw. gesintert und anschließend zum entsprechenden Pulver vermahlen. Das Glasmaterial 4 wird durch Mischen der entsprechenden Metalloxide erhalten. Das Ferrit 3 und das Glasmaterial 4 weisen jeweils einen d₅₀-Wert von etwa 0,5 µm auf. Die Dichtbrandtemperatur der nicht erfindungsgemäßen Glas-Keramik-Zusammensetzung beträgt etwa 900°C.

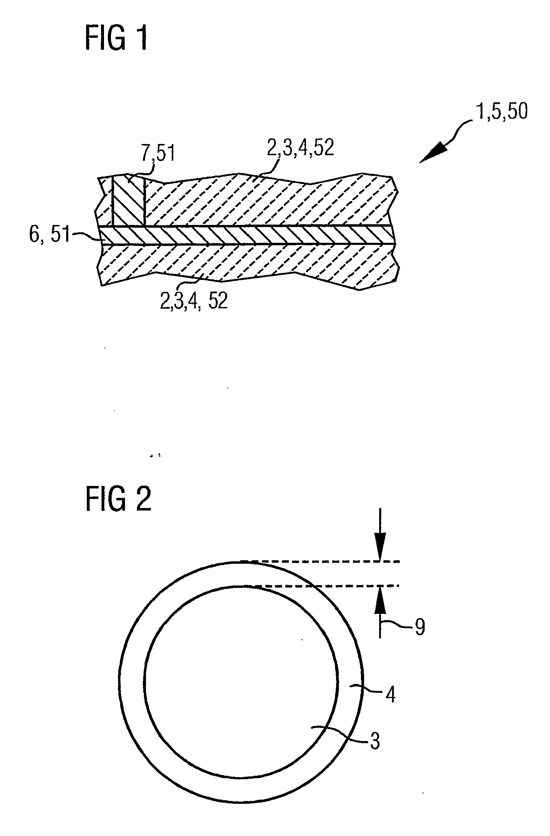

Die vorgestellte Glas-Keramik-Zusammensetzung wird eingesetzt, um mit Hilfe der LTCC-Technologie im Volumen eines keramischen Mehrschichtkörpers 1 ein elektrisches Bauelement 5 zu integrieren. Das elektrische Bauelement 5 ist ein induktives Bauelement 50 in Form eines Transformators (Figur 1).

Zum Herstellen des keramischen Mehrschichtkörpers 1 werden keramische Grünfolien mit der Glas-Keramik-Zusammensetzung mit Leiterstrukturen 6 bedruckt. Dazu wird Paste mit elementarem Silber verwendet. Ebenso werden elektrische Durchkontaktierungen (Vias) 7 in den Grünfolien durch Erzeugen von Löchern und anschließendes Befüllen der Löcher mit der Paste erzeugt. Anschließend werden die bedruckten keramischen Grünfolien übereinander gestapelt, laminiert, entbindert und gesintert. Das Sintern wird bei 900°C durchgeführt. Dabei entstehen aus den Leiterstrukturen 6 und den elektrischen Durchkontaktierungen 7 die Drahtwicklungen 51 des Transformators 50. Aus den keramischen Grünfolien wird der Kern 52 des Transformators 50 gebildet. Eine Porosität des resultierenden Kernmaterials des liegt bei unter 3 Vol.%. Es entsteht ein hochdichter keramischer Mehrschichtkörper 1, in dessen Volumen der Transformator 50 integriert ist.

Abweichend vom beschriebenen Vergleichsbeispiel wird erfindungsgemäß ein Ferrit 3 aus Pulverpartikeln mit einer Beschichtung 8 verwendet (Figur 2). Die Beschichtung 8 enthält Metalloxide, die das Glasmaterial 4 der Glas-Keramik-Zusammensetzung 2 bilden. Zum Herstellen der beschichteten Ferritpartikel wird auf die Oxalatmethode zurückgegriffen. Dabei wird eine Lösung von Oxalaten der Metalle auf die Pulverpartikel aus dem Ferrit 3 aufgetragen, getrocknet und anschließend einer Wärmebehandlung zugeführt werden. Die Oxalate werden zu den entsprechenden Metalloxiden umgesetzt. Es entsteht die Beschichtung 8 aus den Metalloxiden. Die Beschichtung 8 weist dabei eine Schichtdicke 9 von wenigen nm auf.

## Patentansprüche

1. Pulverpartikel zum Herstellen einer Glas-Keramik-Zusammensetzung (2), aufweisend mindestens ein Ferrit (3) mit einer Beschichtung (8), wobei das Ferrit (3) eine mittlere Partikelgröße d₅₀, die aus dem Bereich von einschließlich 0,1 µm bis einschließlich 1,5 µm und insbesondere aus dem Bereich von einschließlich 0,1 µm und einschließlich 0,5 µm ausgewählt ist, aufweist und die Beschichtung (8) des Ferrits (3) Metalloxidvorstufen enthält, die bei einer Wärmebehandlung, beispielsweise während des Sinterns, ein Glasmaterial (4) der Glas-Keramik-Zusammensetzung bildet, und wobei das Glasmaterial (4) ein Oxid mit Bismut aufweist.

2. Pulverpartikel nach Anspruch 1, wobei das Oxid des Bismuts Bismuttrioxid ist.

3. Pulverpartikel nach Anspruch 1 oder 2, wobei das Ferrit (3) ein hexagonales Ferrit ist.

4. Pulverpartikel nach einem der Ansprüche 1 bis 3, wobei das Glasmaterial (4) mindestens ein Oxid mindestens eines aus der Gruppe Beryllium, Magnesium, Calcium, Strontium, Barium, Kupfer und/oder Zink ausgewählt zweiwertigen Metalls Me2+ aufweist.

5. Pulverpartikel nach einem der Ansprüche 1 bis 4, wobei das Glasmaterial (4) mindestens ein Oxid mindestens eines aus der Gruppe Aluminium und/oder Bor ausgewählten dreiwertigen Metalls Me3+ aufweist.

6. Pulverpartikel nach einem der Ansprüche 1 bis 5, wobei das Glasmaterial (4) mindestens ein Oxid mindestens eines aus der Gruppe Silizium, Germanium, Zinn, Titan und/oder Zirkonium ausgewählten vierwertigen Metalls Me4+ aufweist.

7. Pulverpartikel nach einem der Ansprüche 1 bis 6, wobei sich 100 Vol.% der Glas-Keramik-Zusammensetzung aus einem Keramikanteil des Ferrits (3) und einem Glasanteil des Glasmaterials (4) ergeben und der Keramikanteil aus dem Bereich von einschließlich 70 Vol.% bis einschließlich 95 Vol.% und der Glasanteil aus dem Bereich von einschließlich 30 Vol.% bis einschließlich 5 Vol.% ausgewählt ist.

8. Pulverpartikel nach einem der Ansprüche 1 bis 7, wobei die Vorstufe des Metalloxids ein Salz eines Metalls des Metalloxids ist.

9. Pulverpartikel nach Anspruch 8, wobei das Salz des Metalls zumindest eine aus der Gruppe Alkoholat, Carboxylat und/oder Oxalat ausgewählte metallorganische Verbindung ist.

10. Pulverpartikel nach einem der Ansprüche 1 bis 9, wobei die Beschichtung (8) eine aus dem Bereich von 0,01 µm bis 0,05 µm ausgewählte Schichtdicke (9) aufweist.

11. Pulverpartikel nach einem der Ansprüche 1 bis 10, wobei ein Bleioxidanteil und/oder ein Cadmiumoxidanteil der Glas-Keramik-Zusammensetzung (2), des Ferrits (3) und/oder des Glasmaterials (4) maximal 0,1 % und insbesondere maximal 1 ppm beträgt.

12. Pulverpartikel nach einem der Ansprüche 1 bis 11, mit einer Dichtbrandtemperatur von maximal 950°C und insbesondere von maximal 900°C.

13. Pulverpartikel nach einem der Ansprüche 1 bis 12, wobei die Glas-Keramik-Zusammensetzung eine magnetische Permeabilität µ aufweist, die bei einer elektrischen Ansteuerfrequenz im Bereich von einschließlich 0,01 kHz bis einschließlich 1 GHz aus dem Bereich von einschließlich 20 bis einschließlich 100 und insbesondere aus dem Bereich von einschließlich 25 bis einschließlich 75 gewählt ist.

## Claims

1. Powder particle for producing a glass-ceramic composition (2), having at least one ferrite (3) with a coating (8), wherein the ferrite (3) has an average particle size d₅₀ which is selected from the range between (and including) 0.1 µm and 1.5 µm and in particular from the range between (and including) 0.1 µm and 0.5 µm, and the coating (8) of the ferrite (3) contains metal oxide precursors which, during a heat treatment, for example during sintering, form a glass material (4) of the glass-ceramic composition, and wherein the glass material (4) has an oxide with bismuth.

2. Powder particle according to Claim 1, wherein the oxide of bismuth is bismuth trioxide.

3. Powder particle according to Claim 1, wherein the ferrite (3) is a hexagonal ferrite.

4. Powder particle according to one of Claims 1 to 3, wherein the glass material (4) has at least one oxide of at least one of the divalent metals Me²⁺ selected from the group beryllium, magnesium, calcium, strontium, barium, copper and zinc.

5. Powder particle according to one of Claims 1 to 4, wherein the glass material (4) has at least one oxide of at least one of the trivalent metals Me³⁺ selected from the group aluminium and boron.

6. Powder particle according to one of Claims 1 to 5, wherein the glass material (4) has at least one oxide of at least one of the tetravalent metals Me⁴⁺ selected from the group silicon, germanium, tin, titanium and zirconium.

7. Powder particle according to one of Claims 1 to 6, wherein 100% by volume of the glass-ceramic composition consists of a ceramic fraction of the ferrite (3) and a glass fraction of the glass material (4), and the ceramic fraction is selected from the range between (and including) 70% by volume and 95% by volume and the glass fraction is selected from the range between (and including) 30% by volume and 5% by volume.

8. Powder particle according to one of Claims 1 to 7, wherein the precursor of the metal oxide is a salt of a metal of the metal oxide.

9. Powder particle according to Claim 8, wherein the salt of the metal is at least one organometallic compound selected from the group alcoholate, carboxylate and oxalate.

10. Powder particle according to one of Claims 1 to 9, wherein the coating (8) has a thickness (9) selected from the range from 0.01 µm to 0.05 µm.

11. Powder particle according to one of Claims 1 to 10, wherein a lead oxide fraction and/or a cadmium oxide fraction of the glass-ceramic composition (2) of the ferrite (3) and/or of the glass material (4) is at most 0.1% and in particular at most 1 ppm.

12. Powder particle according to one of Claims 1 to 11, with a firing temperature for sealing of at most 950°C and in particular at most 900°C.

13. Powder particle according to one of Claims 1 to 12, wherein the glass-ceramic composition has a magnetic permeability µ which, in the case of an electrical driving frequency in the range between (and including) 0.01 kHz and 1 GHz, is chosen from the range between (and including) 20 and 100 and in particular from the range between (and including) 25 and 75.

## Revendications

1. Particule de poudre pour la fabrication d'une composition de vitrocéramique (2), présentant au moins une ferrite (3) avec un revêtement (8), dans laquelle la ferrite (3) présente une taille moyenne de particule d₅₀, qui est choisie dans la plage de 0,1 µm à 1,5 µm, ces valeurs comprises, et en particulier dans la plage de 0,1 µm à 0,5 µm, ces valeurs comprises, et le revêtement (8) de la ferrite (3) contient des précurseurs d'oxydes métalliques qui, lors d'un traitement thermique, par exemple lors du frittage, forment un matériau vitreux (4) de la composition de vitrocéramique, et dans laquelle le matériau vitreux (4) présente un oxyde avec du bismuth.

2. Particule de poudre selon la revendication 1, dans laquelle l'oxyde de bismuth est le trioxyde de bismuth.

3. Particule de poudre selon la revendication 1 ou 2, dans laquelle la ferrite (3) est une ferrite hexagonale.

4. Particule de poudre selon l'une quelconque des revendications 1 à 3, dans laquelle le matériau vitreux (4) présente au moins un oxyde d'au moins un métal bivalent Me²⁺ choisi dans le groupe béryllium, magnésium, calcium, strontium, baryum, cuivre et/ou zinc.

5. Particule de poudre selon l'une quelconque des revendications 1 à 4, dans laquelle le matériau vitreux (4) présente au moins un oxyde d'au moins un métal trivalent Me³⁺ choisi dans le groupe aluminium et/ou bore.

6. Particule de poudre selon l'une quelconque des revendications 1 à 5, dans laquelle le matériau vitreux (4) présente au moins un oxyde d'au moins un métal tétravalent Me⁴⁺ choisi dans le groupe silicium, germanium, étain, titane et/ou zirconium.

7. Particule de poudre selon l'une quelconque des revendications 1 à 6, dans laquelle 100 % en volume de la composition de vitrocéramique résultent d'une proportion de céramique de la ferrite (3) et d'une proportion de verre du matériau vitreux (4) et la proportion de céramique est choisie dans la plage de 70 % en volume à 95 % en volume, ces valeurs comprises, et la proportion de verre est choisie dans la plage de 30 % en volume à 5 % en volume, ces valeurs comprises.

8. Particule de poudre selon l'une quelconque des revendications 1 à 7, dans laquelle le précurseur de l'oxyde métallique est un sel d'un métal de l'oxyde métallique.

9. Particule de poudre selon la revendication 8, dans laquelle le sel du métal est au moins un composé organométallique choisi dans le groupe alcoolate, carboxylate et/ou oxalate.

10. Particule de poudre selon l'une quelconque des revendications 1 à 9, dans laquelle le revêtement (8) présente une épaisseur de couche (9) choisie dans la plage de 0,01 µm à 0,05 µm.

11. Particule de poudre selon l'une quelconque des revendications 1 à 10, dans laquelle une proportion d'oxyde de plomb et/ou une proportion d'oxyde de cadmium de la composition de vitrocéramique (2), de la ferrite (3) et/ou du matériau vitreux (4) vaut au maximum 0,1 % et en particulier au maximum 1 ppm.

12. Particule de poudre selon l'une quelconque des revendications 1 à 11, avec une température de grésification de 950°C au maximum et en particulier de 900°C au maximum.

13. Particule de poudre selon l'une quelconque des revendications 1 à 12, dans laquelle la composition de vitrocéramique présente une perméabilité magnétique µ qui est choisie dans la plage de 20 à 100, ces valeurs comprises, et en particulier dans la plage de 25 à 75, ces valeurs comprises, pour une fréquence de commande électrique située dans la plage de 0,01 kHz à 1 GHz, ces valeurs comprises.
